# EUROPÄISCHE PATENTSCHRIFT

(11) **EP 0 918 932 B1**
(45) Veröffentlichungstag und Bekanntmachung des Hinweises auf die Patenterteilung: **27.03.2002**
(21) Anmeldenummer: 97936657.2
(22) Anmeldetag: 25.07.1997
(51) Int. Cl.: F04B 17/03, F04B 1/04, B60T 8/40, H02K 7/14

(54) **ELEKTROMOTOR-/PUMPENAGGREGAT**
ELECTROMOTOR/PUMP ASSEMBLY
GROUPE MOTOPOMPE ELECTRIQUE

(30) Priorität: 17.08.1996 DE 19633170
(43) Veröffentlichungstag der Anmeldung: 02.06.1999
(73) Patentinhaber: Continental Teves AG & Co. oHG, 60488 Frankfurt (DE)
(72) Erfinder: DINKEL, Dieter, D-65817 Eppstein (DE); REINARTZ, Hans-Dieter, D-60439 Frankfurt (DE); RISCH, Stephan, D-64331 Weiterstadt (DE)
(74) Vertreter: Portwich, Peter
(86) Internationale Anmeldenummer: EP9704044
(87) Internationale Veröffentlichungsnummer: WO9807986

(56) Entgegenhaltungen:
- EP-A- 0 256 389
- EP-A- 0 682 398
- DE-A- 3 722 988
- DE-A- 4 235 962
- DE-A- 4 423 531
- DE-A- 4 433 970

## Beschreibung

Die Erfindung betrifft ein Elektromotor-/Pumpenaggregat mit einem Elektromotor, dessen pumpenseitiges Wellenende einen Gehäusedeckel durchgreift, sich mit mindestens einem Wälzlager an einem Pumpengehäuse abstützt und zum Antrieb von Pumpenkolben vorgesehen ist, wobei der Gehäusedeckel im Bereich der Wellendurchführung einen Spalt freiläßt, welcher einen pumpenseitigen Kurbelraum mit einem Motorinnenraum verbindet.

Ein derartiges Elektromotor-/Pumpenaggregat ist bereits aus der DE-OS 43 15 826 bekannt. Beim Betrieb dieses Aggregates kann es vorkommen, daß ein Teil des zu pumpenden Druckmittels als sog. Leckage in einen pumpenseitigen Kurbelraum und von dort durch einen Spalt zwischen Pumpengehäuse und Motorgehäuse in den Motorinnenraum gelangt. Das ungewollt in den Bereich des Rotors eingebrachte Druckmittel kann infolge von Kurzschlüssen zu Motorausfällen führen.

Aufgabe der vorliegenden Erfindung ist es daher, den Elektromotor eines Elektromotor-/Pumpenaggregates auf kostengünstige Art und Weise gegen das ungewollte Eindringen von Lekkageflüssigkeiten zu schützen. Eine weitere Aufgabe der Erfindung ist es, den axialen Bauraum des Aggregates gering zu halten, weil insbesondere im Automobilbereich kleinbauende Aggregate bevorzugt werden.

Diese Aufgabe wird dadurch gelöst, daß ein, den Spalt versperrendes Dichtelement vorgesehen ist. Mit diesen Merkmalen wird der Elektromotor in besonders zuverlässiger aber ferner auch kostengünstiger Art und Weise gegen das Eindringen von Leckflüssigkeiten geschützt. Es ist hervorzuheben, daß sich der Einbau eines Dichtelementes in einfacher Art und Weise bewerkstelligen läßt.

In Weiterbildung der Erfindung ist es vorgesehen, daß das Dichtelement am Gehäusedeckel angeordnet ist und in radialer Richtung die Motorwelle beaufschlagt. Vorteilhaft ist hierbei die besonders geringe Baulänge. Ferner läßt sich diese Ausführungsform einfach herstellen, wenn im Rahmen der Herstellung eine Silikondichtung in die zugeordnete Nut des Gehäusedeckels eingespritzt wird.

Bei einer Variante der Erfindung ist das Dichtelement an einer Stirnseite des Gehäusedeckels angeordnet und beaufschlagt in axialer Richtung einen Lagerring. Diese Ausführungsform zieht einen geringen Fertigungsaufwand nach sich, weil das Dichtelement an dem Lagerring anliegt, der bereits im Anlieferzustand feinbearbeitet ist. Es kann somit ein bisher notwendiger Fertigungsschritt entfallen.

Bei einer anderen Ausführungsform weist das Dichtelement ringgestalt mit einem V-förmigen Querschnitt auf und ist federnd in einem Zwischenraum zwischen einem Lagerinnenring und einem Anschlagring angeordnet. Diese Bauform läßt sich mit geringstem Bauaufwand an verschiedenartigste Anwendungsfälle anpassen.

Gemäß einer zusätzlichen Weiterbildung ist das Dichtelement an einer motorseitigen Stirnfläche in einer Nut des Gehäusedeckels angeordnet und beaufschlagt in axialer Richtung den Kommutator. Hierbei wird die Dichtwirkung verstärkt durch den Einfluß des vorgeschalteten Spaltes zwischen Lagerdeckel und Motorwelle.

Schließlich wird gemäß einer Ausführungsform vorgeschlagen, daß das Dichtelement mit einem ringförmigen Grundkörper in den Gehäusedeckel eingesetzt ist und mit einem abgewinkelten, kegelartigen Abschnitt in axialer Richtung den Kommutator beaufschlagt.

Weiterbildungen der Erfindungen gehen aus Unteransprüchen, der Beschreibung und der Zeichnung hervor. Die Erfindung wird im folgenden anhand von Ausführungsbeispielen, die in den Figuren dargestellt sind, näher beschrieben.
- Fig. 1: Schnitt durch ein grundsätzlich bekanntes Elektromotor-/Pumpenaggregat;
- Fig. 2: einen abgetrennten Schnitt durch ein Ausführungsbeispiel der Erfindung mit einem radial wirkenden Dichtelement in größerem Maßstab;
- Fig. 3: abgetrennter Schnitt durch eine Einzelheit eines weiteren Ausführungsbeispieles mit axial wirkendem Dichtelement in größerem Maßstab;
- Fig. 4: Schnitt wie in Fig. 3 durch eine weitere Ausführungsform;
- Fig. 5: Schnitt wie in Fig. 3 durch ein viertes Ausführungsbeispiel;
- Fig. 6: Schnitt wie in Fig. 3 durch ein fünftes Ausführungsbeispiel;
- Fig. 7: Schnitt wie in Fig. 3 mit einem im Querschnitt als V-förmigen Dichtring ausgebildeten Dichtelement;
- Fig. 8: Schnitt wie in Fig. 3 mit einem axial wirkenden, den Kommutator beaufschlagenden Dichtelement;
- Fig. 9: Schnitt wie in Fig. 3 mit einer Abwandlung eines axial wirkenden, den Kommutator beaufschlagenden Dichtelementes.

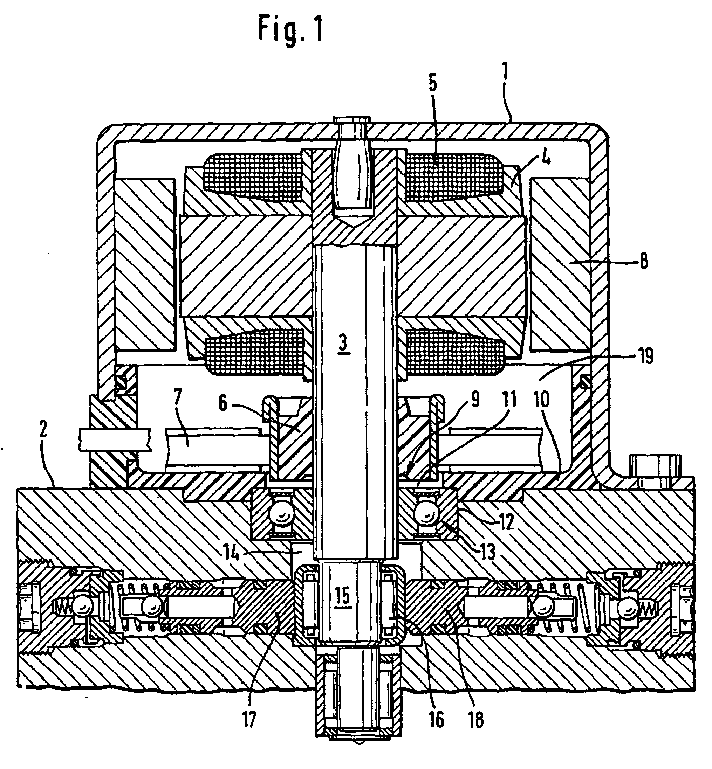

Fig. 1 zeigt ein grundsätzlich bekanntes Motor-Pumpenaggregat im Schnitt. Es besteht aus einem Motorengehäuse 1 und einem Pumpengehäuse 2, welche aneinander befestigt, beispielsweise ineinandergesteckt sind. Der Elektromotor verfügt über eine Motorwelle 3, die aus dem Motorengehäuse 1 herausragt und in das Pumpengehäuse 2 eingreift. Der Elektromotor verfügt ferner über grundsätzlich bekannte Bauteile wie Anker 4, Wicklungen 5, Kollektor 6 und Bürsten 7, deren Zusammenwirken mit Permanentmagneten 8 grundsätzlich bekannt ist und keiner weiteren Erklärung bedarf. Im Bereich einer Wellendurchführung 9 tritt die Motorwelle 3 aus dem Motorengehäuse 1 und greift in das Pumpengehäuse 2 ein. In dem pumpenseitigen Gehäusedeckel 10 des Motorengehäuses 1 ist hierzu ein Spalt 11 vorgesehen, so daß sich die Motorwelle frei drehen kann.

In dem Pumpengehäuse 2 ist eine mehrstufige Bohrung 12 vorgesehen und eine erste Bohrungsstufe dient der Lagerung der Motorwelle 3 mit Hilfe eines Wälzlagers 13. Im Anschluß daran befindet sich in dem Pumpengehäuse 2 ein Kurbelraum 14, welcher einem an der Motorwelle 3 angeordneten Exzenter 15 Raum für seine Drehbewegung verschafft. Am Umfang des Exzenters 15 ist ein Nadellager 16 vorgesehen, welches senkrecht zur Pumpenwelle 3 angeordnete Pumpenkolben 17,18 betätigt.

Beim Betrieb des Aggregates kommt es zu einer Leckage der Pumpenkolben 17,18, so daß Teile der Förderflüssigkeit in den Kurbelraum 14 und durch das Wälzlager 13 sowie den Spalt 11 in den Motorinnenraum 19 eindringen. Die in den Motorinnenraum 19 angedrungene Flüssigkeit, bei der es sich meist um Hydrauliköl handelt, führt infolge Kurzschluß zu Motorausfällen oder sonstigen Betriebsstörungen bzw. Beschädigungen. Bei dem dargestellten Aggregat ist die Gefahr von Kurzschlüssen besonders groß, weil der Gehäusedeckel 10 auf der pumpenabgewandten Seite Kohlebürsten 7 haltert. Diese befinden sich somit nahe an der Wellendurchführung 9.

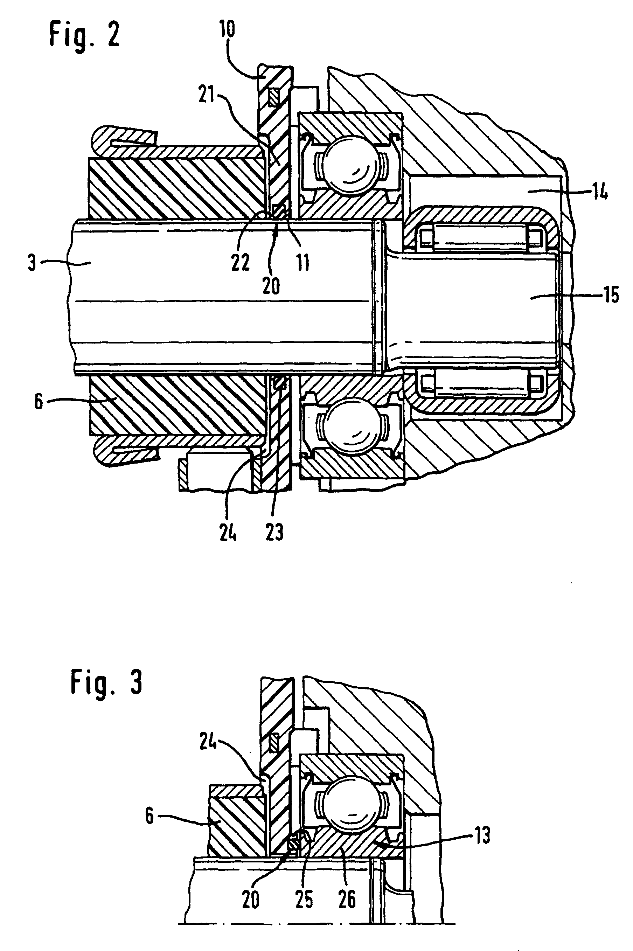

Aus diesem Grunde wird im Bereich der Wellendurchführung 9 zumindest ein Dichtelement 20 vorgeschlagen, welches den Spalt 11 zwischen Motorinnenraum 19 und Kurbelraum 14 versperrt und im wesentlichen an dem Gehäusedeckel 10 angeordnet ist. Ein derartiges Dichtelement 20 geht aus Fig. 2 hervor. Im Unterschied zu Fig. 1 erstreckt sich der Gehäusedekkel 10 mit seiner Wandung 21 nahezu bis an die Motorwelle 3 und verfügt zur Wellendurchführung über eine Bohrung 22 mit einem geringen Spalt 11 zur Motorwelle 3. Die Bohrung 22 ist an ihrem Umfang mit einer umlaufenden Nut 23 versehen, in der ein Dichtelement 20, vorzugsweise ein Dichtring, angeordnet ist und die Motorwelle 3 radial beaufschlagt. Das Dichtelement 20 ist aus elastischem Material, beispielsweise aus Silikon-Kunststoff, welcher in die Nut 23 eingespritzt wird, so daß der Spalt 11 zuverlässig abgedichtet wird, wenn die Dichtlippe des Dichtelementes 20 motorwellenseitig anliegt. Kollektorseitig verfügt der Gehäusedeckel 10 über eine Ausnehmung 24, in die der Kollektor 6 zumindest teilweise eingreift. Weil das Dichtelement 20 mit dem Gehäusedeckel 10 fluchtet sowie schmaler ist als die Wandung 21 und weil zumindest eine Ausnehmung 24 im Gehäusedeckel 10 vorgesehen ist, in die der Kollektor 6 zumindest teilweise eingreift, verfügt diese Anordnung über eine besonders geringe axiale Baulänge. Selbstverständlich ist es in diesem Zusammenhang auch möglich eine pumpenseitige Ausnehmung vorzusehen, in die ein zugeordnetes Bauteil, beispielsweise ein Lagerring eingreift. Somit wird bei geringsten Abmaßen des Aggregates eine zuverlässige Abdichtung des Motorengehäuses 1 erreicht, selbst wenn der Gehäusedeckel 10 motorseitig die Bürsten 7 haltert, diese also besonders nahe der Wellendurchführung 9 angeordnet sind.

Bei einem abgewandelten Ausführungsbeispiel gemäß Fig. 3, welche im Detail den Dichtungs- und Lagerbereich zeigt, ist das Dichtelement 20 in einem zylindrischen und ringförmigen Ansatz 25 angeordnet und beaufschlagt einen Lagerring 26, beispielsweise einen Lagerinnenring des Wälzlagers 13. Der flanschartige Ansatz 25 springt pumpenseitig und axial in Richtung auf den Lagerring 26 vor. Ferner ist bei dieser Bauform eine Ausnehmung 24 für den Kollektor 6 vorgesehen. Ein wesentlicher Vorteil dieser Ausführung ist die Möglichkeit, alle Bauteile des Aggregates in axialer Richtung zu montieren, wobei die Ausnehmung 24 zu einer verkürzten Baulänge führt.

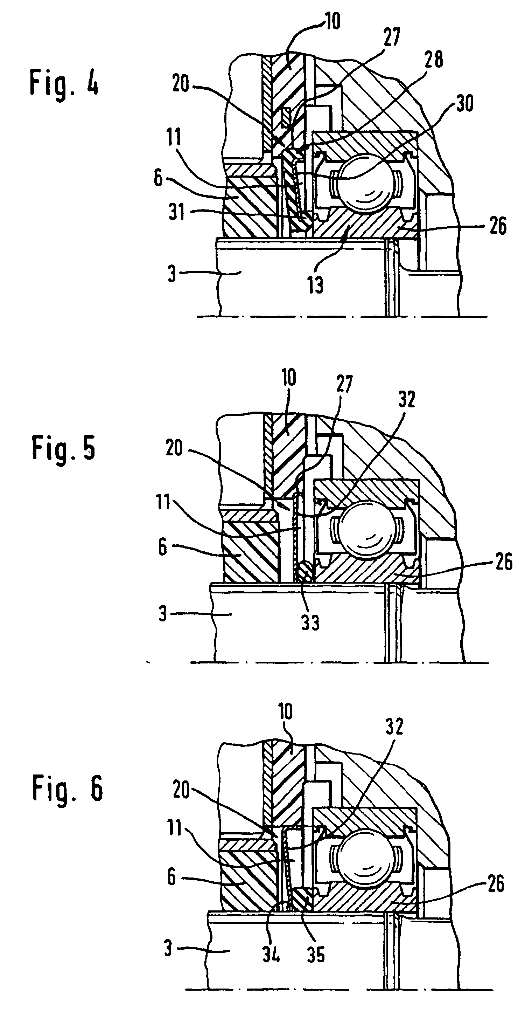

Bei der Abwandlung gemäß Fig. 4 ist der Gehäusedeckel 10 mit einer pumpenseitigen Stufenbohrung 27 versehen. In die Stufenbohrung 27 ist ein Wellendichtring 28 mit einem ringförmigen Versteifungs- und Federelement 30 sowie mit einer elastischen Dichtlippe 31 eingesetzt. Der Wellendichtring sitzt an einer Bohrungsstufe auf. Die elastische Dichtlippe 31 beaufschlagt den Lagerinnenring des Wälzlagers 13. Eine vergleichbare Ausführungsform zeigt Fig. 5. Auch hierbei ist das Dichtelement 20 in eine pumpenseitige Stufenbohrung 27 eingesetzt. Das Dichtelement 20 umfaßt hierbei einen Anschlagring 32, welcher in die Stufenbohrung 27 eingesetzt ist sowie aus einem O-Ring 33, welcher zwischen Anschlagring 32 und Lagerring 26 eingequetscht ist und somit den Spalt 11 zwischen Gehäusedeckel 10 und Motorwelle 3 versperrt. Eine ähnliche Ausführungsform ist in Fig. 6 gezeigt. Im Unterschied zu Fig. 5 liegt eine Durchgangsbohrung im Gehäusedekkel 10 vor und der Anschlagring 32 ist federnd ausgebildet und das federnde Ende 34 beaufschlagt einen PTFE-Ring 35, der gegen den Lagerring 26 gepreßt wird. Von Vorteil ist hierbei, daß der PTFE-Ring 35 besonders geringe Reibwerte aufweist, so daß die Verlustarbeit infolge Reibung minimal ist. Zur Minimierung der Reibarbeit ist es bei allen Ausführungsbeispielen vorgesehen, den Lagerinnenring zu beaufschlagen, weil damit der wirksame Hebelarm zur Achse der Motorwelle 3 minimal wird.

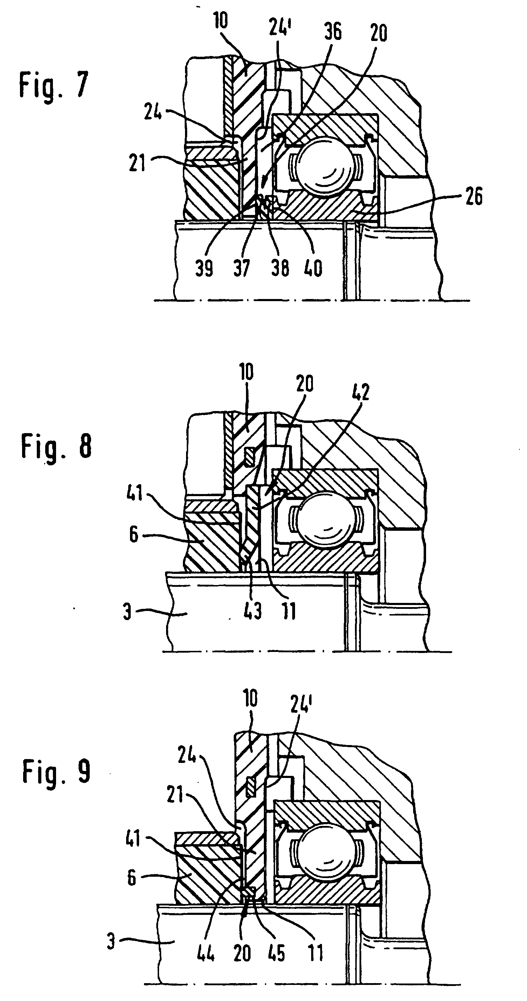

Bei dem Ausführungsbeispiel gemäß Fig. 7 ist zwischen dem Lagerring 26 und der Wandung 21 des Gehäusedeckels 10 ein Zwischenraum 36 vorgesehen, in dem ein ringförmiges Dichtelement 20 mit V-förmigem Querschnitt angeordnet ist und den Lagerinnenring sowie den Gehäusedeckel 10 federnd beaufschlagt. Hierbei liegen die beiden Dichtlippen 37,38 an den entsprechenden Gegenflächen 39,40 an und eine wellenseitiger Dichtungsabschnitt des Dichtelementes 20 sitzt auf der Welle auf, so daß das Dichtelement 20 zusammen mit der Welle rotiert. Von Vorteil ist hierbei, daß sich an das Dichtelement 20 noch der Spalt 11 anschließt, was die Dichtwirkung zusätzlich verstärkt.

Eine andere Lösung wird bei den Ausführungsformen gemäß den Fig. 8 und 9 beschritten, bei denen jeweils eine Stirnfläche 41 des Kollektors 6 von dem Dichtelement 20 beaufschlagt wird. Gemäß Fig. 8 weist das Dichtelement 20 einen ringförmigen Grundkörper 42 und einen abgewinkelten, kegelartigen Abschnitt 43 auf, welcher den Kollektor 6 in axialer Richtung beaufschlagt. Hierbei weist der Gehäusedeckel 10 einen vergleichsweise großen Spalt 11 zu der Motorwelle 3 auf. Demgegenüber ist bei der Lösung gemäß Fig. 9 der Spalt zwischen Gehäusedeckel 10 und Motorwelle 3 dadurch minimiert, daß der Gehäusedeckel 10 mit seiner Wandung 21 besonders nahe an die Motorwelle 3 herangeführt ist. Das Dichtelement 20 befindet sich an einer motorseitigen Stirnfläche 44 des Gehäusedeckels 10 im Inneren einer Nut 45 und beaufschlagt in axialer Richtung die zugeordnete Gegenfläche 38 des Kollektors 6. Schließlich weist der Gehäusedeckel 10 hierbei, wie auch in Fig. 7, sowohl auf der Pumpenseite als auch auf der Motorseite Ausnehmungen 24',24 auf, wobei der Kollektor 6 in die motorseitige Ausnehmung 24 zumindest teilweise eingreift.

Es versteht sich, daß vielgestalte Ausführungsformen der Erfindung denkbar sind, ohne den Grundgedanken der Lehre zu verlassen.

## Patentansprüche

1. Elektromotor-/Pumpenaggregat mit einem Elektromotor, dessen pumpenseitiges Ende einer Motorwelle (3) einen Gehäusedeckel (10) durchgreift, sich mit mindestens einem Wälzlager (13) an einem Pumpengehäuse (2) abstützt und zum Antrieb von Pumpenkolben (17,18) vorgesehen ist, wobei der Gehäusedeckel (10) im Bereich einer Wellendurchführung (9) einen Spalt (11) freiläßt, welcher einen pumpenseitigen Kurbelraum (14) mit einem Motorinnenraum (19) verbindet, **dadurch gekennzeichnet, daß** ein den Spalt (11) versperrendes Dichtelement (20) vorgesehen ist.

2. Elektromotor-/Pumpenaggregat nach Anspruch 1, **dadurch gekennzeichnet, daß** das Dichtelement (20) am Gehäusedekkel (10) angeordnet ist und in radialer Richtung die Motorwelle (3) beaufschlagt.

3. Elektromotor-/Pumpenaggregat nach einem oder mehreren der vorhergehenden Ansprüche, **dadurch gekennzeichnet, daß** der Gehäusedeckel (10) eine Bohrung (22) aufweist, welche wellenseitig mit einer Nut (23) für das Dichtelement (20) versehen ist.

4. Elektromotor-/Pumpenaggregat nach einem oder mehreren der vorhergehenden Ansprüche, **dadurch gekennzeichnet, daß** der Gehäusedeckel (10) zur Bildung eines engen Spaltes (11) mit einer Wandung (21) nahe an die Motorwelle (3) heranreicht.

5. Elektromotor-/Pumpenaggregat nach einem oder mehreren der vorhergehenden Ansprüche, **dadurch gekennzeichnet, daß** der Gehäusedeckel (10) kollektorseitig eine Ausnehmung (24) aufweist, in die der Kollektor (6) teilweise hineinreicht.

6. Elektromotor-/Pumpenaggregat nach einem oder mehreren der vorhergehenden Ansprüche, **dadurch gekennzeichnet, daß** das Dichtelement (20) an einer Stirnseite des Gehäusedeckels (10) angeordnet ist und in axialer Richtung einen Lagerring (26) beaufschlagt.

7. Elektromotor-/Pumpenaggregat nach einem oder mehreren der vorhergehenden Ansprüche, **dadurch gekennzeichnet, daß** der Gehäusedeckel (10) in axialer Richtung einen zylindrischen Ansatz (25) mit einer Nut (23) aufweist, in der das Dichtelement (20) angeordnet ist.

8. Elektromotor-/Pumpenaggregat nach einem oder mehreren der vorhergehenden Ansprüche, **dadurch gekennzeichnet, daß** das Dichtelement (20) einen Lagerinnenring beaufschlagt.

9. Elektromotor-/Pumpenaggregat nach einem oder mehreren der vorhergehenden Ansprüche, **dadurch gekennzeichnet, daß** das Dichtelement (20) als Wellendichtring (28) ausgebildet ist.

10. Elektromotor-/Pumpenaggregat nach einem oder mehreren der vorhergehenden Ansprüche, **dadurch gekennzeichnet, daß** das Dichtelement (20) ein ringförmiges Versteifungs/und Federelement (30) sowie mindestens eine elastische Dichtlippe (31) aufweist.

11. Elektromotor-/Pumpenaggregat nach einem oder mehreren der vorhergehenden Ansprüche, **dadurch gekennzeichnet, daß** das Dichtelement (20) in eine pumpenseitige Stufenbohrung (27) eingesetzt ist.

12. Elektromotor-/Pumpenaggregat nach einem oder mehreren der vorhergehenden Ansprüche, **dadurch gekennzeichnet, daß** das Dichtelement (20) einen Anschlagring (32) und einen zugeordneten O-Ring (33) umfaßt, und zwischen Gehäusedeckel (10) und Lagerinnenring angeordnet ist.

13. Elektromotor-/Pumpenaggregat nach einem oder mehreren der vorhergehenden Ansprüche, **dadurch gekennzeichnet, daß** der Anschlagring (32) federnd ausgebildet ist, wobei an einem federnden Ende (34) ein PTFE-Ring angeordnet ist.

14. Elektromotor-/Pumpenaggregat nach einem oder mehreren der vorhergehenden Ansprüche, **dadurch gekennzeichnet, daß** das Dichtelement (20) Ringform sowie einen V-förmigen Querschnitt aufweist und in einem Zwischenraum (36) zwischen Lagerinnenring und Anschlagring (32) angeordnet ist.

15. Elektromotor-/Pumpenaggregat nach einem oder mehreren der vorhergehenden Ansprüche, **dadurch gekennzeichnet, daß** das Dichtelement (20) an einer motorseitigen Stirnfläche (41) in einer Nut (45) des Gehäusedeckels (10) angeordnet ist und in axialer Richtung den Kollektor (6) beaufschlagt.

16. Elektromotor-/Pumpenaggregat nach einem oder mehreren der vorhergehenden Ansprüche, **dadurch gekennzeichnet, daß** das Dichtelement (20) mit einem ringförmigen Grundkörper (42) in den Gehäusedeckel (10) eingesetzt ist und mit einem abgewinkelten, kegelartigen Abschnitt (43) in axialer Richtung den Kollektor (6) beaufschlagt.

## Claims

1. Electric motor/pump assembly including an electric motor having a pump-sided end of a motor shaft (3) which extends through a housing lid (10), is supported with at least one roller bearing (13) on a pump housing (2), and whose purpose is to drive pump pistons (17, 18), wherein the housing lid (10) in the area of a shaft passage (9) leaves open a gap (11) which connects a pump-sided crank chamber (14) to an inside space (19) of the motor,
**characterized in that** a sealing element (20) is provided and closes the gap (11).

2. Electric motor/pump assembly as claimed in claim 1,
**characterized in that** the sealing element (20) is mounted on the housing lid (10) and acts upon the housing shaft (3) in a radial direction.

3. Electric motor/pump assembly as claimed in any one or more of the preceding claims,
**characterized in that** the housing lid (10) includes a bore (22) which has a groove (23) for the sealing element (20) on the side close to the shaft.

4. Electric motor/pump assembly as claimed in any one or more of the preceding claims,
**characterized in that** the housing lid (10) extends proximate the motor shaft (3) in order to produce a narrow gap (11) along with a wall (21).

5. Electric motor/pump assembly as claimed in any one or more of the preceding claims,
**characterized in that** the housing lid (10) on the collector side has a recess (24) into which the collector (6) extends in part.

6. Electric motor/pump assembly as claimed in any one or more of the preceding claims,
**characterized in that** the sealing element (20) is mounted on a frontal end of the housing lid (10) and acts upon a bearing ring (26) in an axial direction.

7. Electric motor/pump assembly as claimed in any one or more of the preceding claims,
**characterized in that** the housing lid (10) has, in an axial direction, a cylindrical projection (25) with a groove (23) in which the sealing element (20) is arranged.

8. Electric motor/pump assembly as claimed in any one or more of the preceding claims,
**characterized in that** the sealing element (20) acts upon an inner bearing ring.

9. Electric motor/pump assembly as claimed in any one or more of the preceding claims,
**characterized in that** the sealing element (20) is configured as a shaft sealing ring (28).

10. Electric motor/pump assembly as claimed in any one or more of the preceding claims,
**characterized in that** the sealing element (20) includes an annular reinforcing and resilient element (30) and at least one elastic sealing lip (31).

11. Electric motor/pump assembly as claimed in any one or more of the preceding claims,
**characterized in that** the sealing element (20) is inserted into a stepped bore (27) close to the pump.

12. Electric motor/pump assembly as claimed in any one or more of the preceding claims,
**characterized in that** the sealing element (20) includes a stop ring (32) and an associated O-ring (33) and is interposed between the housing lid (10) and the inner bearing ring.

13. Electric motor/pump assembly as claimed in any one or more of the preceding claims,
**characterized in that** the stop ring (32) has a resilient design, and a PTFE ring is arranged on one resilient end (34).

14. Electric motor/pump assembly as claimed in any one or more of the preceding claims,
**characterized in that** the sealing element (20) has an annular configuration and a V-shaped cross-section and is arranged in a space (36) between the inner bearing ring and stop ring (32).

15. Electric motor/pump assembly as claimed in any one or more of the preceding claims,
**characterized in that** the sealing element (20) on a motor-sided frontal end (41) is mounted in a groove (45) of the housing lid (10) and acts upon the collector (6) in an axial direction.

16. Electric motor/pump assembly as claimed in any one or more of the preceding claims,
**characterized in that** the sealing element (20) with an annular basic member (42) is inserted into the housing lid (10) and, with a deflected conical portion (43), acts upon the collector (6) in an axial direction.

## Revendications

1. Groupe motopompe électrique comportant un moteur électrique dont l'extrémité côté pompe d'un arbre moteur (3) traverse un couvercle de carter (10), prend appui contre un carter de pompe (2) par au moins un palier de roulement (13), et est prévu pour l'entraînement de pistons de pompe (17, 18), le couvercle de carter (10) dégageant, dans la zone d'une traversée d'arbre (9), une fente (11) qui relie une enceinte de vilebrequin (14) côté pompe à un volume intérieur de moteur (19), **caractérisé en ce qu'**il est prévu un élément d'étanchéité (20) qui obstrue la fente (11).

2. Groupe motopompe électrique selon la revendication 1, **caractérisé en ce que** l'élément d'étanchéité (20) est disposé sur le couvercle de carter (10) et sollicite l'arbre moteur (3) dans la direction radiale.

3. Groupe motopompe électrique selon une ou plusieurs des revendications précédentes, **caractérisé en ce que** le couvercle de carter (10) présente un perçage (22) qui est pourvu, côté arbre, d'une rainure (23) pour l'élément d'étanchéité (20).

4. Groupe motopompe électrique selon une ou plusieurs des revendications précédentes, **caractérisé en ce que**, pour former une fente (11) étroite, le couvercle de carter (10) s'étend par une paroi (21) jusqu'à proximité de l'arbre moteur (3).

5. Groupe motopompe électrique selon une ou plusieurs des revendications précédentes, **caractérisé en ce que** le couvercle de carter (10) présente, côté collecteur, un évidement (24) dans lequel s'engage partiellement le collecteur (6).

6. Groupe motopompe électrique selon une ou plusieurs des revendications précédentes, **caractérisé en ce que** l'élément d'étanchéité (20) est disposé sur un côté frontal du couvercle de carter (10) et sollicite axialement une bague de palier (26).

7. Groupe motopompe électrique selon une ou plusieurs des revendications précédentes, **caractérisé en ce que** le couvercle de carter (10) présente axialement un appendice cylindrique (25) avec une rainure (23) dans laquelle est disposé l'élément d'étanchéité (20).

8. Groupe motopompe électrique selon une ou plusieurs des revendications précédentes, **caractérisé en ce que** l'élément d'étanchéité (20) sollicite une bague intérieure de palier.

9. Groupe motopompe électrique selon une ou plusieurs des revendications précédentes, **caractérisé en ce que** l'élément d'étanchéité (20) est réalisé en tant que bague d'étanchéité d'arbre (28).

10. Groupe motopompe électrique selon une ou plusieurs des revendications précédentes, **caractérisé en ce que** l'élément d'étanchéité (20) comporte un élément de renfort et élément à ressort (30) de forme annulaire ainsi qu'au moins une lèvre d'étanchéité élastique (31).

11. Groupe motopompe électrique selon une ou plusieurs des revendications précédentes, **caractérisé en ce que** l'élément d'étanchéité (20) est inséré dans un trou étagé (27) côté pompe.

12. Groupe motopompe électrique selon une ou plusieurs des revendications précédentes, **caractérisé en ce que** l'élément d'étanchéité (20) comprend une bague de butée (32) et un joint torique (33) associé, et est disposé entre le couvercle de carter (10) et la bague intérieure de palier.

13. Groupe motopompe électrique selon une ou plusieurs des revendications précédentes, **caractérisé en ce que** la bague de butée (32) est réalisée élastique, une bague en PTFE étant disposée sur une extrémité élastique (34).

14. Groupe motopompe électrique selon une ou plusieurs des revendications précédentes, **caractérisé en ce que** l'élément d'étanchéité (20) présente une forme annulaire ainsi qu'une section en V et est disposé dans un interstice (36) entre la bague intérieure de palier et la bague de butée (32).

15. Groupe motopompe électrique selon une ou plusieurs des revendications précédentes, **caractérisé en ce que** l'élément d'étanchéité (20) est disposé sur une surface frontale (41) côté moteur dans une rainure (45) du couvercle de carter (10), et sollicite axialement le collecteur (6).

16. Groupe motopompe électrique selon une ou plusieurs des revendications précédentes, **caractérisé en ce que** l'élément d'étanchéité (20) est inséré par un corps de base (42) de forme annulaire dans le couvercle de carter (10) et sollicite axialement le collecteur (6) par une partie (43) coudée de type cône.
